# EUROPÄISCHE PATENTANMELDUNG

(11) **EP 0 916 877 A2**
(43) Veröffentlichungstag der Anmeldung: **19.05.1999**
(21) Anmeldenummer: 98890331.6
(22) Anmeldetag: 12.11.1998
(51) Int. Cl.: F16J 15/00

(54) **Hochdruckfeste Dichtungseinrichtung sowie Verwendung einer derartigen Dichtungseinrichtung**

(30) Priorität: 14.11.1997 AT 710/97 U
(71) Anmelder: J.M. VOITH AG, 3100 St. Pölten (AT)
(72) Erfinder: Hoffmann, Walter, Ing., 3423 St. Andrä (AT)
(74) Vertreter: Haffner, Thomas M., Dr.

(57) **Zusammenfassung**

Bei einer hochdruckfesten Dichtungseinrichtung für einen zur Rotation oder Translation um oder längs einer Achse antreibbaren ersten Teil relativ zu einem zweiten, ortsfesten oder drehbaren Teil mit einer Mehrzahl von Dichtungselementen ist eine erste Lippendichtung (22) mit in Richtung zu einem Raum (20) mit höherem Druck weisender, am zweiten, ortsfesten oder drehbaren Teil anliegender Lippe am antreibbaren ersten Teil angeordnet. Dabei sind wenigstens zwei der Lippendichtung (22) nachgeschaltete, in größerem axialen Abstand von dem Raum mit höherem Druck angeordnete Dichtungen (23), welche einen Ringraum (24) begrenzen in Abstand von der Lippendichtung (22) am antreibbaren ersten Teil angeordnet, wobei der Ringraum (24) zwischen den nachgeschalteten Dichtungen (23) mit einem Fluid gefüllt ist.

## Beschreibung

Die Erfindung bezieht sich auf eine hochdruckfeste Dichtungseinrichtung für einen zur Rotation oder Translation um oder längs einer Achse antreibbaren ersten Teil relativ zu einem zweiten, ortsfesten oder drehbaren Teil mit einer Mehrzahl von Dichtungselementen sowie auf eine bevorzugte Verwendung einer derartigen Dichtungseinrichtung.

Hochdruckfeste Dichtungseinrichtungen sind beispielsweise für Hochdruckzylinderkolbenaggregate geeignet. Hochdruckfeste Dichtungseinrichtungen der eingangs genannten Art sind insbesondere dann von besonderem Vorteil, wenn beispielsweise ein rotierbarer kolbenartiger Bauteil um eine Achse rotierend in einem Zylinder gehalten ist und über einen axialen Weg verschoben werden soll. Insbesondere dann, wenn bei einer derartigen Rotation und einer derartigen axialen Verschiebung nicht nur ein hoher Druck aufrecht erhalten werden soll, sondern gleichzeitig eine zuverlässige Abdichtung des Druckraumes, beispielsweise gegenüber Luftfeuchtigkeit gewährleistet werden soll, werden an derartige hochdruckfeste Dichtungseinrichtungen besonders hohe Anforderungen gestellt. Dichtungseinrichtungen mit einer Mehrzahl von gleichen oder voneinander verschiedenen Dichtungselementen, wie beispielsweise Lippendichtungen, O-Ringe oder im Falle von Brennkraftmaschinen in Form von Kolbenringen, sind in unterschiedlicher Kombination bekannt. Für die Herstellung von Dispersionen mit niedriger oder mittlerer Viskosität ist es bekannt, Mischwerkzeuge in einem unter hohem Druck gesetzten Raum einzusetzen oder unmittelbar auf die Mischwerkzeuge einen hohen Preßdruck auszuüben. Insbesondere dann, wenn flüssige Phasen zum Einsatz gelangen, deren rheologische Eigenschaften sich unter Anwendung von hohen Drucken charakteristisch verändern, kann es unter Anwendung von hohen Drucken gelingen, Mischungen und insbesondere Dispersionen von Festkörpern in flüssigen Phasen herzustellen, welche bei Anwendung geringen Druckes nicht ohne weiteres miteinander mischbar bzw. dispergierbar sind.

Mischaggregate, wie beispielsweise das aus der EP-B1 0 196 291 bekannte Mischaggregat, bestehen aus einem Mischgefäß mit einem Bodenteil und einem Deckelteil. Im Deckelteil ist bei der bekannten Einrichtung eine Preßplatte dicht geführt, wobei sich durch die Preßplatte ein als Rotor ausgebildetes Mischwerkzeug erstreckt, welches längs seiner Rotationsachse axial verschieblich im Mischbehälter geführt ist. Der Mischvorgang wird bei einer derartigen Einrichtung ausschließlich durch das Mischwerkzeug bewerkstelligt und die im Deckelteil dichtend geführte Preßplatte dient dem anschließenden Ausbringen des gemischten Gutes und damit der leichteren Entleerung des Behälters. Wenn mit einer derartigen Preßplatte gleichzeitig auf das zu mischende Medium ein entsprechend hoher Druck ausgeübt werden soll, um die rheologische Eigenschaft des Mediums charakteristisch zu verändern oder die Scherkräfte eines rotierenden dichtend geführten Werkzeuges, welche auf das zu mischende Gut ausgeübt werden, wesentlich zu erhöhen, sind konventionelle Dichtungseinrichtungen insbesondere dann problematisch, wenn mit Rücksicht auf das zu mischende Medium der Zutritt von Luftfeuchtigkeit in das Medium mit Sicherheit verhindert werden soll. Das Mischen und Dispergieren bei mittel- bis hochviskoser Flüssigkeit kann bei Anwendung geringer Preßdrucke und damit geringer Scherkräfte je nach gewähltem Medium nur unvollständig gelingen oder hohe Zeit beanspruchen. Durch eine Anwendung eines entsprechend hohen Druckes bei gleichzeitig sicherem Abschluß gegenüber der Atmosphäre kann die Misch- und Dispergierzeit wesentlich herabgesetzt werden.

Die Erfindung zielt nun darauf ab, eine hochdruckfeste Dichtungseinrichtung der eingangs genannten Art zu schaffen, welche bevorzugt für Einrichtungen zum Homogenisieren oder Dispergieren von flüssigen Phasen oder Feststoffen in flüssigen Phasen in einem druckfesten Behälter zum Einsatz gelangen kann, mit welcher gleichzeitig mit einer wesentlichen Verringerung der Misch- bzw. Dispergierzeit auch ein sicherer Abschluß gegen atmosphärische Bedingungen gewährleistet ist. Ein derartiger sicherer Abschluß gegenüber atmosphärischen Einflüssen und insbesondere gegenüber Luftfeuchtigkeit kann auch bei anderen geschlossenen Systemen, bei welchen empfindliches Gut im geschlossenen System unter hohem Druck gefördert werden soll, Bedeutung erlangen. Zur Lösung dieser Aufgabe besteht die erfindungsgemäße hochdruckfeste Dichtungseinrichtung mit einer Mehrzahl von Dichtungselementen im wesentlichen darin, daß eine erste Lippendichtung mit in Richtung zu einem Raum mit höherem Druck weisender, am zweiten, ortsfesten oder drehbaren Teil anliegender Lippe am antreibbaren ersten Teil angeordnet ist, daß wenigstens zwei der Lippendichtung nachgeschaltete, in größerem axialen Abstand von dem Raum mit höherem Druck angeordnete Dichtungen, welche einen Ringraum begrenzen, in Abstand von der Lippendichtung am antreibbaren ersten Teil angeordnet sind und daß der Ringraum zwischen den nachgeschalteten Dichtungen mit einem Fluid gefüllt ist. Dadurch, daß dem Druckraum benachbart eine erste Lippendichtung mit in Richtung zum Druckraum weisender Lippe angeordnet ist, wird in an sich bekannter Weise bei zunehmenden Preßdruck eine verbesserte Dichtwirkung erzielt, da die Dichtlippe vom Medium im Druckraum gegen die Wand des zweiten Bauteiles, beispielsweise des Zylinders, gepreßt wird. Dadurch, daß im Anschluß an diese Lippendichtung und in größerem Abstand vom Druckraum wenigstens zwei weitere Dichtungen angeordnet sind, welche einen Ringraum begrenzen, wird die Möglichkeit geschaffen in diesen Ringraum ein Fluid einzufüllen oder einzupressen, welches eine weitere Abdichtung gegenüber atmosphärischen Einflüssen gewährleistet, wobei das Fluid wahlweise von Inertgas oder einem dichtenden Medium, wie beispielsweise einer Dichtflüssigkeit, gebildet sein kann.

Mit Vorteil wird die erfindungsgemäße hochdruckfeste Dichtungseinrichtung so angeordnet, daß der antreibbare erste Teil als Preßplatte oder Preßkolben und der zweite, ortsfeste oder drehbare Teil von einer Zylinderwand oder einer ggf. drehbaren Kolbenstange gebildet ist. Die Preßplatte oder der Preßkolben kann selbst rotierbar angetrieben sein und beispielsweise an seiner dem Druckraum zugewandten Seite unmittelbar Mischwerkzeuge tragen. Bei einer derartigen Einrichtung wird unter hoher Preßkraft eine entsprechend hohe Scherkraft auf das Medium ausgeübt, sodaß eine intensive Durchmischung auch bei hoch viskosem unter hohem Druck eine geringere Viskosität annehmendem Medium rascher und zuverlässiger gelingt.

Um eine möglichst große Dichtstrecke zu erzielen, ist mit Vorteil die Anordnung so getroffen, daß die dem Raum mit höherem Druck zugewandte Lippendichtung am Umfang der dem genannten Raum zugewandten Stirnfläche des ersten Teiles angeordnet ist.

Die beiden weiteren Dichtungen, welche zwischeneinander den mit Fluid gefüllten Ringraum begrenzen, können entsprechend einfacher ausgebildet sein und so dimensioniert werden, daß das dichtende Fluid sicher zwischen den beiden Dichtungen eingeschlossen wird. Mit Vorteil ist die Ausbildung hiefür so getroffen, daß die weiteren, den Ringraum einschließenden Dichtungen von in Umfangsnuten des ersten Teiles angeordneten O-Ringen oder elastisch aufweitbaren Kolbenringen gebildet sind.

Um eine entsprechend hohe Dichtwirkung relativ zum Ringraum mit dem im Ringraum enthaltenden dichtenden Fluid zu gewährleisten und gleichzeitig sicherzustellen, daß der Verschiebewiderstand für eine axiale Verschiebung des ersten Bauteiles bei der Verschiebung entsprechend gering ist, kann mit Vorteil die Ausbildung so getroffen sein, daß die elastisch aufweitbaren Kolbenringe in den Umfangsnuten radial verschieblich dichtend geführt sind und an ihrer der Dreh- oder Verschiebeachse zugewandten Innenseite mit einer Druckmittelquelle verbindbar sind. Auf diese Weise kann der Anpreßdruck der weiteren Dichtungselemente bei einem Verschiebevorgang herabgesetzt werden, sodaß der Verschiebewiderstand verringert wird. Die vollständige und hohe Anpreßung und damit die entsprechende zusätzliche Dichtwirkung kann in der Folge während der Rotation des ersten Bauteiles um seine Achse erzielt werden, sodaß eine zuverlässige Dichtung während der Rotation gewährleistet ist und gleichzeitig der hohe Preßdruck aufrecht erhalten werden kann.

In besonders einfacher Weise kann die Ausbildung so getroffen sein, daß das zwischen den weiteren Dichtungen eingeschlossene Fluid ein gasförmiges oder flüssiges Dichtfluid, insbesondere ein dichtendes Öl, Fett oder Wachs ist und über eine Dichtfluidquelle vorzugsweise unter Druck in den zwischen den weiteren Dichtungen ausgebildeten Ringraum preßbar ist. Die Dichtfluidquelle kann hiebei von einer Pumpe gebildet werden, wobei der Pumpendruck bei einer Anpreßung der weiteren Dichtungen an die Behälterwand entsprechend erhöht werden kann, um eine zusätzliche zuverlässige Dichtung zu gewährleisten.

In besonders einfacher Weise ist die Ausbildung so getroffen, daß die Lippendichtung aus Metall, insbesondere Hartmetall, besteht, wodurch besonders hohe Drucke sicher aufgenommen werden können. Eine derartige aus Metall bestehende Lippendichtung kann in ihrer Dichtwirkung noch weiter verbessert werden, wenn die Ausbildung, wie es einer bevorzugten Weiterbildung entspricht, so getroffen ist, daß die Lippendichtung wenigstens an ihrem am zweiten Teil anliegenden außenliegenden Teilbereich der Lippe mit keramischem Material, mit Metall, insbesondere Hartmetall oder hochfestem und dichtem Kunststoff beschichtet ist. Für die Beschichtung des außenliegenden Teilbereiches der Lippen können hiebei konventionelle Beschichtungsverfahren und insbesondere ein Verfahren eingesetzt werden, mit welchem lediglich die Außenseite mit keramischem Material beschichtet wird. Derartige Verfahren umfassen beispielsweise die Verwendung eines Lichtbogens zur Beschleunigung von zumindest oberflächlich angeschmolzenem Material, welches unter hoher Geschwindigkeit auf die Außenseiten der Lippen aufgespürt wird. Prinzipiell können die beiden weiteren den Ringraum begrenzenden Dichtungen gleich aufgebaut sein, wobei allerdings die dem Druckraum abgewandte letzte Dichtung entsprechend einfacher ausgebildet sein kann, ohne daß die Dichtwirkung insgesamt wesentlich beeinträchtigt wird. Analog kann auch die Gegenlauffläche zur Dichtung ausgebildet sein.

Im Druckraum selbst können zusätzliche Einbauten oder Werkzeuge angeordnet sein, wenn die Dichtungseinrichtung, wie es einer bevorzugten Verwendung der erfindungsgemäßen Dichtungseinrichtung entspricht, für Einrichtungen zum Homogenisieren oder Dispergieren von flüssigen Phasen oder von Feststoffen in flüssigen Phasen in einem druckfesten Behälter zum Einsatz gelangt. Beispielsweise kann hier zusätzlich zu einer mit der hochdruckfesten Dichtungseinrichtung ausgestatteten Dichtplatte ein rotierendes Werkzeug vorgesehen sein. Umgekehrt kann naturgemäß auch die die hochdruckfeste Dichtungseinrichtung tragende Platte an ihrer dem Hochdruckraum zugewandten Seite entsprechende Profilierungen oder Einbauten aufweisen, welche die Erzielung hoher Scherkräfte oder ein besonders intensives Durchmischen des im Druckraum eingeschlossenen Materials gewährleisten. Die hochdruckfeste Dichtungseinrichtung kann naturgemäß auch an einer Platte angeordnet sein, welche verschließbare axiale Durchbrechungen aufweist, sodaß die rotierbare und axial verschliebliche Platte selbst ein besonders geeignetes Mischwerkzeug ausbildet. Die hochdruckfeste Dichtungseinrichtung ist hiebei nicht auf eine Anordnung zwischen der Innenwand eines Zylinders und der Außenseite eines Kolbens oder einer Platte beschränkt. Vielmehr kann eine entsprechend symmetrisch ausgebildete Einrichtung eine sichere Abdichtung gegenüber einer drehbaren Welle gewährleisten, wie sie beispielsweise für den Antrieb eines rotierbaren Mischwerkzeuges, dessen Antriebswelle druckfest durch eine Preßplatte hindurchgeführt ist, zum Einsatz gelangen.

Die Erfindung wird nachfolgend schematisch an Ausführungsbeispielen näher erläutert.

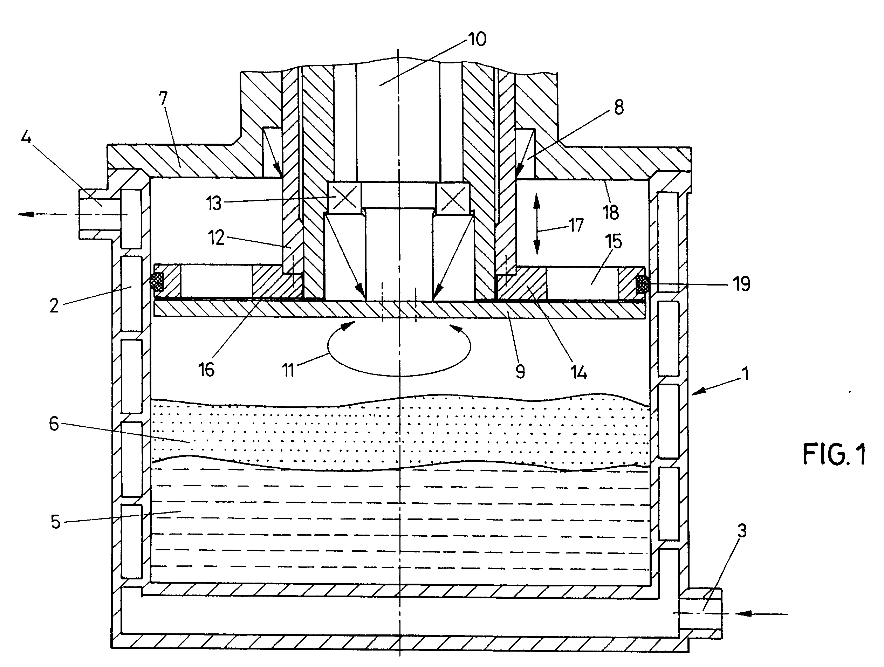

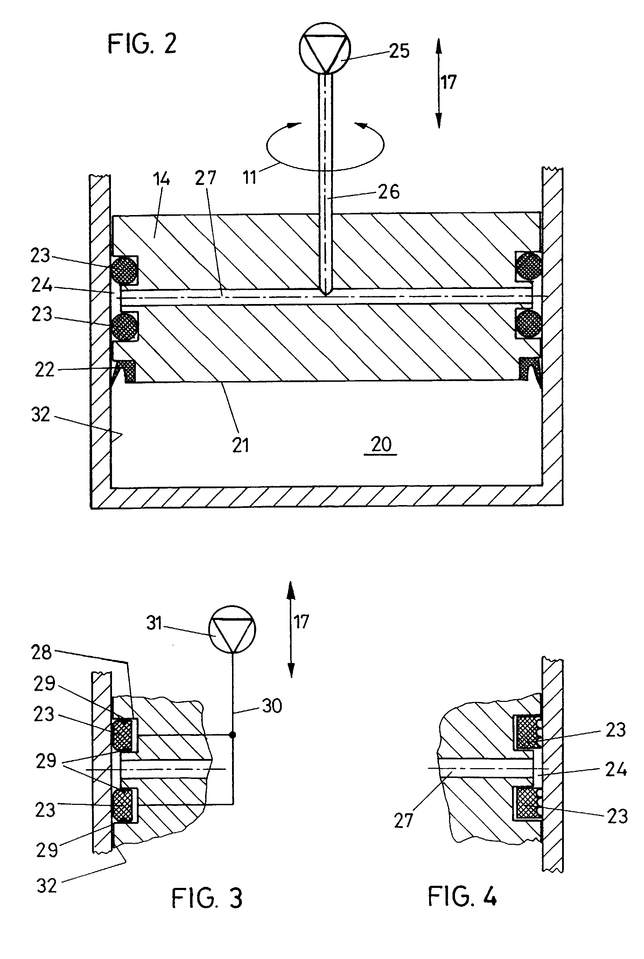

In Fig. 1 ist hiebei eine Mischeinrichtung schematisch dargestellt, welche einen Rotor und eine Druckplatte aufweist, Fig. 2 zeigt schematisch die erfindungsgemäße Dichtung einer Druckplatte bzw. eines Kolbens in einem Zylinder bzw. Behälter, Fig. 3 eine abgewandelte Ausbildung der weiteren Dichtelemente und Fig. 4 eine weitere abgewandelte Ausbildung der zusätzlichen Dichtungselemente in einer Teilansicht entsprechend der Fig. 2.

In Fig. 1 ist mit 1 ein Mischbehälter bezeichnet, welcher von einem Kühlmantel 2 umgeben ist. Das Kühlmedium kann über die Anschlüsse 3 und 4 zu- und abgeführt werden.

In den Mischbehälter 1 wird zunächst das zu vermischende Gut in vordosierter Menge eingebracht, wobei mit 5 die flüssige Phase und mit 6 eine Pulverphase bezeichnet ist.

Im Deckel 7, welcher auf dem Behälter 1 aufgesetzt werden kann, ist eine Gleitlagerung 8 vorgesehen, über welche die Mischwerkzeuge bei ihrem axialen Hub geführt wird. Das Mischwerkzeug umfaßt einen Rotor 9, welcher durch eine Rotorwelle 10 zur Rotation im Sinne des Pfeiles 11 antreibbar ist. Der Antriebsmotor ist hiebei konventioneller Art und der Einfachheit halber nicht dargestellt.

Die Rotorwelle 10 ist konzentrisch zu einer Pinole 12 angeordnet und rotierend über Lager 13 in dieser gelagert. Die Pinole 12 ist drehfest mit einem plattenförmigen Element 14 verbunden, welches Durchbrechungen 15 aufweist. Zwischen dem Rotor 9 und dem plattenförmigen Element 14 ist ein Spalt 16 ausgebildet, wobei der Rotor 9 und das plattenförmige Element 14 im Sinne des Doppelpfeiles 17 in axialer Richtung gemeinsam oder relativ zueinander verschiebbar sind. Das plattenförmige Element 14 kann bei einem derartigen Hub in Richtung des Doppelpfeiles 17 gegen Verdrehung gesichert sein oder aber mit einem gesonderten oder vom Drehantrieb der Rotorwelle 10 abgeleiteten Drehantrieb mit verschiedener Drehgeschwindigkeit zur Rotation angetrieben sein. Zum Räumen der Unterkante des Deckels 7 genügt es allerdings das plattenförmige Element 14 lediglich in der oberen Endlage zur Rotation anzutreiben, sodaß die Unterkante 18 der Deckelplatte 7 sicher geräumt werden kann.

Zum Mischen und Dispergieren des Materials wird nun die Pinole 12 und damit das plattenförmige Element 14 sowie der Rotor 9 in das zu vermischende Medium abgesenkt, wobei das Medium vom Rotor 9 erfaßt und durch den Spalt 16 und die Durchbrechungen 15 des plattenförmigen Elementes hindurchgefördert wird. Zwischen dem plattenförmigen Element 14 und dem Rotor 9 wird das Material auf Scherung beansprucht, sodaß eine intensive Vermischung im Spalt 16 erfolgt.

Der Spalt 16 kann durch geeignete axiale Verstellung gewählt werden und während des Hubes im Sinne des Doppelpfeiles 17 konstant gehalten werden oder aber auch im Betrieb verändert werden. Die Durchbrechungen 15 des plattenförmigen Elementes 14 bzw. der Druckplatte können wahlweise verschlossen werden. Die Druckplatte ist hiebei an ihrem Umfang mit Dichtungselementen 19 ausgestattet, welche durch die erfindungsgemäße Ausbildung ein erhöhtes Maß an Druckfestigkeit und damit die Aufbringung besonders hoher Drücke erlauben.

In Fig. 2, 3 und 4 sind nun Details einer derartigen Ausgestaltung der Dichtungselemente 19 näher erläutert, wobei in Fig. 2 der Einfachheit halber lediglich ein Zylinderkolbenaggregat dargestellt, wie es auch für Hochdruckpressen zum Einsatz gelangen könnte. Die Druckplatte 14 in Fig. 2 ist wiederum im Sinne des Doppelpfeiles 17 in Höhenrichtung verstellbar, wobei eine Rotationsbewegung im Sinne des Doppelpfeiles 11 erfolgen kann.

Der Druckraum ist in Fig. 2 mit 20 bezeichnet, wobei die dem Druckraum benachbarte Unterkante 21 des Kolbens bzw. der Preßplatte 14 an ihrem Umfang eine Lippendichtung 22 trägt. In größerem axialen Abstand vom Druckraum 20 sind zwei weitere Dichtungselemente 23 angeordnet, welche einen Ringraum 24 begrenzen. In diesen Ringraum 24 kann über die Pumpe 25 und die Leitungen 26 bzw. die radialen Bohrungen 27 Dichtfluid eingepreßt werden. Bei der Darstellung nach Fig. 2 sind die weiteren Dichtungselemente 23 von einfachen O-Ringen gebildet. Abweichend von dieser einfachen Ausbildung kann, wie in Fig. 3 dargestellt, auch ein radial verstellbares Dichtungselement 23 zum Einsatz gelangen. Die radial verstellbaren Dichtungselemente 23 sind in den Umfangsnuten 28 der Preßplatte 14 radial verstellbar dichtend geführt, wobei die entsprechenden Dichtungselemente mit 29 bezeichnet sind. Der Grund der Nuten 28 kann hiebei mit Druckmedium über Leitungen 30 beaufschlagt werden, wobei die Druckmittelquelle für das Dichtfluid mit 31 bezeichnet ist. Um die axiale Verschiebung im Sinne des Doppelpfeiles 17 zu erleichtern, kann der Druck in den Leitungen 30 verringert werden, sodaß die Dichtelemente 23 lediglich unter ihrer eigenen elastischen Vorspannung ohne zusätzliche Unterstützung durch den Druck des Druckmittels in den Leitungen 30 in gleitender Verbindung mit der Innenwand 32 des Behälters bzw. des Zylinders gehalten werden.

Bei der Ausbildung nach Fig. 4 sind zusätzliche weitere Dichtelemente 23 nach Art von Kolbenringen vorgeschlagen, welche zwischeneinander wiederum den Ringraum 24 begrenzen, in welcher Dichtfluid, beispielsweise dichtende Gase oder dichtende Flüssigkeiten über die radialen Leitungen 27 eingepreßt werden können.

## Patentansprüche

1. Hochdruckfeste Dichtungseinrichtung für einen zur Rotation oder Translation um oder längs einer Achse antreibbaren ersten Teil relativ zu einem zweiten, ortsfesten oder drehbaren Teil mit einer Mehrzahl von Dichtungselementen, dadurch gekennzeichnet, daß eine erste Lippendichtung (22) mit in Richtung zu einem Raum (20) mit höherem Druck weisender, am zweiten, ortsfesten oder drehbaren Teil anliegender Lippe am antreibbaren ersten Teil angeordnet ist, daß wenigstens zwei der Lippendichtung (22) nachgeschaltete, in größerem axialen Abstand von dem Raum (20) mit höherem Druck angeordnete Dichtungen (23), welche einen Ringraum (24) begrenzen in Abstand von der Lippendichtung (22) am antreibbaren ersten Teil angeordnet sind und daß der Ringraum (24) zwischen den nachgeschalteten Dichtungen (23) mit einem Fluid gefüllt ist.

2. Hochdruckfeste Dichtungseinrichtung nach Anspruch 1, dadurch gekennzeichnet, daß der antreibbare erste Teil als Preßplatte (14) oder Preßkolben und der zweite, ortsfeste oder drehbare Teil von einer Zylinderwand (32) oder einer ggf. drehbaren Kolbenstange gebildet ist.

3. Hochdruckfeste Dichtungseinrichtung nach Anspruch 1 oder 2, dadurch gekennzeichnet, daß die dem Raum (20) mit höherem Druck zugewandte Lippendichtung (22) am Umfang der dem genannten Raum (20) zugewandten Stirnfläche des ersten Teiles angeordnet ist.

4. Hochdruckfeste Dichtungseinrichtung nach Anspruch 1, 2 oder 3, dadurch gekennzeichnet, daß die weiteren, den Ringraum (24) einschließenden Dichtungen von in Umfangsnuten (28) des ersten Teiles angeordneten O-Ringen oder elastisch aufweitbaren Kolbenringen (23) gebildet sind.

5. Hochdruckfeste Dichtungseinrichtung nach Anspruch 4, dadurch gekennzeichnet, daß die elastisch aufweitbaren Kolbenringe in den Umfangsnuten (28) radial verschieblich dichtend geführt sind und an ihrer der Dreh- oder Verschiebeachse zugewandten Innenseite mit einer Druckmittelquelle (31) verbindbar sind.

6. Hochdruckfeste Dichtungseinrichtung nach einem der Ansprüche 1 bis 5, dadurch gekennzeichnet, daß das zwischen den weiteren Dichtungen (23) eingeschlossene Fluid ein gasförmiges oder flüssiges Dichtfluid, insbesondere ein dichtendes Öl, Fett oder Wachs ist und über eine Dichtfluidquelle (25) vorzugsweise unter Druck in den zwischen den weiteren Dichtungen (23) ausgebildeten Ringraum (24) preßbar ist.

7. Hochdruckfeste Dichtungseinrichtung nach einem der Ansprüche 1 bis 6, dadurch gekennzeichnet, daß die Lippendichtung (22) aus Metall, insbesondere Hartmetall, besteht.

8. Hochdruckfeste Dichtungseinrichtung nach einem der Ansprüche 1 bis 7, dadurch gekennzeichnet, daß die Lippendichtung (22) wenigstens an ihrem am zweiten Teil anliegenden außenliegenden Teilbereich der Lippe mit keramischen Material, mit Metall, insbesondere Hartmetall oder hochfestem und dichtem Kunststoff beschichtet ist.

9. Hochdruckfeste Dichtungseinrichtung nach einem der Ansprüche 1 bis 8, dadurch gekennzeichnet, daß die beiden weiteren, den Ringraum (24) begrenzenden Dichtungen (23) gleich aufgebaut sind.

10. Verwendung einer Dichtungseinrichtung nach einem der Ansprüche 1 bis 9 für Einrichtungen zum Homogenisieren oder Dispergieren von flüssigen Phasen oder von Feststoffen in flüssigen Phasen in einem druckfesten Behälter.
